(19) Europäisches Patentamt
European Patent Office
Office européen des brevets

(11) **EP 4 310 228 A1**

(12) **EUROPEAN PATENT APPLICATION**
published in accordance with Art. 153(4) EPC

(43) Date of publication:
**24.01.2024 Bulletin 2024/04**

(21) Application number: **22771161.1**

(22) Date of filing: **07.03.2022**

(51) International Patent Classification (IPC):
*D01F 6/60* [(2006.01)]     *A41D 31/00* [(2019.01)]
*C08J 11/06* [(2006.01)]     *D01G 11/00* [(2006.01)]

(52) Cooperative Patent Classification (CPC):
**A41D 31/00; C08J 11/06; D01F 6/60; D01G 11/00;**
Y02W 30/62

(86) International application number:
**PCT/JP2022/009652**

(87) International publication number:
**WO 2022/196407 (22.09.2022 Gazette 2022/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.03.2021 JP 2021042022**
**21.05.2021 JP 2021085825**

(71) Applicant: **Toray Industries, Inc.**
**Tokyo 103-8666 (JP)**

(72) Inventors:
• **KUJIRAI, Mizuki**
**Nagoya-shi, Aichi 451-8666 (JP)**
• **KISHIDA, Taisuke**
**Nagoya-shi, Aichi 451-8666 (JP)**
• **WATANABE, Yudai**
**Nagoya-shi, Aichi 451-8666 (JP)**

(74) Representative: **Kador & Partner Part mbB**
**Corneliusstraße 15**
**80469 München (DE)**

(54) **NYLON-6 FIBER, AND MATERIAL-RECYCLED POLYCAPROAMIDE RESIN PELLETS AND METHOD FOR PRODUCTION THEREOF**

(57)    The nylon-6 fiber is a nylon-6 for which at least 20 weight% of the fiber is recycled material, and is characterized by having a weight-average molecular weight (Mw)/number-average molecular weight (Mn), this being the dispersion ratio in the molecular weight distribution obtained by GPC measurement of the nylon-6, of not more than 3.4, and by having a z-average molecular weight (Mz)/weight-average molecular weight (Mw) of not more than 1.6. Provided is a material-recycled nylon-6 fiber that exhibits a good processability.

EP 4 310 228 A1

**Description**

TECHNICAL FIELD

The present invention relates to a nylon-6 fiber using material-recycled polycaproamide resin pellets and particularly provides material-recycled polycaproamide resin pellets suitable for producing a material-recycled nylon-6 fiber with good processability.

BACKGROUND ART

Polyamide fibers represented by polycaproamide and polyhexamethylene adipamide are excellent in mechanical properties and dimensional stability and therefore are widely used not only in clothing applications but also in interiors, vehicle interiors, industrial applications, and the like.

However, when polycaproamide is viewed from the viewpoint of resource recycling-based global environment protection, there is a problem that its crude material is a petroleum resource, does not have biodegradability, and becomes industrial waste. Under such circumstances, in order to adapt polyamides produced from petroleum resources such as polycaproamide to a resource recycling, recycling of polyamides is actively performed.

For example, there has been proposed a recycled polyamide crimped yarn mainly for industrial use, which is obtained by melting and filtering polyamide fiber scraps or polymer scraps generated in a yarn making process to obtain a material-recycled polyamide resin and then blending 5 to 80 mass% of the polyamide resin and has a deformed or hollow cross section, a total fineness of 500 to 3,000 dtex, and a single yarn fineness of 5 to 50 dtex (Patent Document 1).

In addition, as a method for producing polyamide short fibers made of a material-recycled polyamide, a production method has been proposed in which polyamide fiber scraps or polymer scraps generated in a yarn making process are melted and filtered to obtain material-recycled polyamide resin pellets, which are filtered again with a spinneret during melt spinning (Patent Document 2).

In addition, a production method has been proposed in which polycaproamide and polyhexamethylene adipamide fiber scraps to which a spinning oil is attached are pulverized, washed (deoiled), dehydrated, and melted to obtain material-recycled polyamide resin pellets and then melt-spun to obtain a material-recycled polyamide fiber (Patent Document 3).

PRIOR ART DOCUMENT

PATENT DOCUMENTS

Patent Document 1: Japanese Patent Laid-open Publication No. 2013-155454
Patent Document 2: Japanese Patent Laid-open Publication No. 2009-84767
Patent Document 3: Japanese Patent Laid-open Publication No. 2020-2336

SUMMARY OF THE INVENTION

PROBLEMS TO BE SOLVED BY THE INVENTION

However, in the recycled polyamide crimped yarn having a deformed or hollow cross section described in Patent Document 1, the waste material used for material recycling also contains polymer scraps, but it is difficult to remove low polymer components that cause spinneret contamination from the polymer scraps, and as a result, a large amount of the low polymer components is contained in the obtained material-recycled polyamide resin, so that spinneret contamination or the like occurs and yarn breakage occurs frequently. In fact, when the material-recycled polyamide resin is blended in an amount of more than 80 mass%, leakage from a pack, discharge abnormalities, and the like due to an increase in the internal pressure of a spinning pack may occur due to foreign matters and the like contained in the material-recycled polyamide resin, and it is presumed that a part of the discharge abnormalities is caused by low polymer components.

In addition, as the polyamide polymer mainly suitable for industrial applications as described in Patent Document 1, a polymer of a high viscosity type (high molecular weight type) is often used to ensure the degree of deformation or because high strength is required. In addition, the waste material used for material recycling also contains polymer scraps, but it is difficult to remove low-molecular-weight impurities from the polymer scraps, and the obtained material-recycled polyamide polymer contains a large amount of low-molecular-weight impurities. When the applications of a material-recycled polyamide polymer mainly for industrial applications are expanded to clothing applications, that is, when a polyamide long fiber having a total fineness of 200 dtex or less and a single yarn fineness of 0.2 to 10 dtex is produced, since the fiber surface area is larger than the fineness range for industrial applications, the amount of remaining low-molecular-weight impurities is large, and the influence on the yarn-making properties and raw yarn characteristics is large. From the viewpoint of yarn making properties, the material-recycled polyamide polymer easily causes thickening and thermal deterioration due to the influence of thermal history in addition to remaining low-molecular-weight impurities and contains a large amount of high-molecular-weight impurities. Accordingly, there are problems that reduction in strength and elongation and variation in the amino end group content are likely to occur, yarn breakage occurs when the product is subjected to high-order processing to impair high-order passability, and when the product is subjected to dyeing, a dyeing difference occurs, and it is difficult to meet a severe fabric visual inspection standard required for clothing applications.

In the method for producing a material-recycled polyamide short fiber described in Patent Document 2, an oil attached to fiber scraps or polymer scraps as a raw material of the material-recycled polyamide resin pellets and low polymer components in the fiber scraps or the polymer scraps are not removed, and removal itself of the low polymer components from the polymer scraps is difficult as in Patent Document 1. As a result, a large amount of the low polymer components is contained in the obtained material-recycled polyamide resin pellets, and contamination of the spinneret or the like occurs, resulting in many yarn breakages. In addition, due to a decrease in strength and elongation caused by remaining low-molecular-weight impurities, yarn breakage occurs when the product is subjected to high-order processing, and high-order passability is poor.

The method for producing a material-recycled polyamide fiber described in Patent Document 3 also includes a deoiling step of polyamide fiber scraps and is effective in removing foreign matters derived from an oil but is insufficient in removing low polymer components contained in the polyamide fiber scraps. As a result, a large amount of low polymer components is contained in the obtained material-recycled polyamide resin pellets. Long fibers are obtained in a high-speed winding range, and melt spinning is possible, but contamination of the spinneret due to low polymer components and the like occur, and yarn breakage increases day by day of spinning, and from the viewpoint of long-term continuous production, use for production of polyamide fibers has been difficult.

An object of the present invention is to solve the above-mentioned problems to reduce low polymer components contained in material-recycled polycaproamide resin pellets to the utmost, which has been difficult in the prior art, and particularly to provide material-recycled polycaproamide resin pellets suitable for producing a material-recycled nylon-6 fiber with good processability. Another object of the present invention is to provide a recycled nylon fiber containing less low-molecular-weight impurities and high-molecular-weight impurities by using the material-recycled polycaproamide resin and provide a nylon-6 fiber that has raw yarn characteristics equivalent to those of a virgin type nylon-6 fiber and provides a woven or knitted fabric for clothing having high-order passability and high quality.

SOLUTIONS TO THE PROBLEMS

The present invention adopts the following configuration in order to solve the above-described problems.

(1) A nylon-6 fiber containing 20 wt% or more of a material-recycled nylon-6 fiber and having a variance ratio of a molecular weight distribution, weight-average molecular weight (Mw)/number-average molecular weight (Mn), obtained by gel permeation chromatography (GPC) measurement of 3.4 or less and z-average molecular weight (Mz)/weight-average molecular weight (Mw) of 1.6 or less.

(2) The nylon-6 fiber according to (1), having a total fineness of 3 to 200 dtex, a single yarn fineness of 0.2 to 10 dtex, and a CV% of a continuous strength-elongation product of 3.5 or less.

(3) The nylon-6 fiber according to (1) or (2), having a YI value of 15 or less.

(4) The nylon-6 fiber according to any one of (1) to (3), in which a material-recycled nylon-6 resin pellet contains 1.5 wt% or less of a low polymer component.

(5) A material-recycled polycaproamide resin pellet containing 1.5 wt% or less of a low polymer component detected by a hot water extraction method.

(6) The material-recycled polycaproamide resin pellet according to (5), having a filtration pressure increase rate of 2.0 MPa/hour or less.

(7) A method for producing the material-recycled polycaproamide resin pellet according to (5), including cutting a fiber scrap generated in production process of a polycaproamide fiber, immersing the cut fiber scrap in hot water at 50°C or more, melting, filtering, and discharging the fiber scrap, cooling the discharged polycaproamide resin with water, cutting the polycaproamide resin into a pellet, and immersing the polycaproamide resin pellet in hot water at 50°C or more.

(8) The method for producing the material-recycled polycaproamide resin pellet according to (7), in which, in the step of melting, filtering, and discharging the fiber scrap, discharge is performed after the filtration step is performed twice or more.

EFFECTS OF THE INVENTION

According to the present invention, it is possible to provide a material-recycled nylon-6 fiber that has raw yarn characteristics equivalent to those of a virgin type nylon-6 fiber and provides a woven or knitted fabric for clothing having high-order passability and high quality. It is also possible to reduce low polymer components contained in material-recycled polycaproamide resin pellets to the utmost and particularly to provide material-recycled polycaproamide resin pellets suitable for producing a material-recycled polycaproamide fiber with good processability.

EMBODIMENT OF THE INVENTION

Hereinafter, the present invention will be described in detail.

A nylon-6 fiber of the present invention is a nylon-6 fiber containing 20 wt% or more of material-recycled nylon-6 in the fiber and having weight-average molecular weight (Mw)/number-average molecular weight (Mn), which is a variance ratio of a molecular weight distribution, obtained by GPC measurement of the nylon-6 of 3.4 or less and z-average molecular weight (Mz)/weight-average molecular weight (Mw) of 1.6 or less.

The nylon-6 fiber of the present invention is a polycaproamide fiber (hereinafter referred to as a nylon-6 fiber) in which a material-recycled polycaproamide resin containing 1.5 wt% or less of low polymer components is blended in an amount of 20 wt% or more of the fiber. From the viewpoint of increasing awareness of global environmental conservation in recent years, a nylon-6 fiber containing 50 wt% to 100 wt% of a material-recycled polycaproamide resin in the fiber is preferable.

The variance ratio of the molecular weight distribution of the nylon-6 fiber of the present invention in terms of weight-average molecular weight (Mw)/number-average molecular weight (Mn) is 3.4 or less, and z-average molecular weight (Mz)/weight-average molecular weight (Mw) is 1.6 or less. Within such ranges, a high-quality woven or knitted fabric for clothing having raw yarn characteristics equivalent to those of virgin type nylon-6 fibers and excellent high-order passability can be obtained.

The molecular weight distributions of the number-average molecular weight (Mn), the weight-average molecular weight (Mw), and the z-average molecular weight (Mz) in the present invention were determined by gel permeation chromatography (GPC). Specifically, a gel permeation chromatograph GPC was used as an apparatus, and one "Shodex HEIP-G" manufactured by Showa Denko K.K. and two "Shodex HEIP-606M" manufactured by Showa Denko K.K. were used as columns. In addition, hexafluoroisopropanol added with 5 mM of sodium trifluoroacetate was used as a measurement solvent, 3 mg of polymethyl methacrylate (PMMA) manufactured by Showa Denko K.K. as a standard sample and 3 mg of a nylon-6 fiber were used, and the mixture was gently stirred at room temperature and then filtered using a 0.45-$\mu$m filter to adjust a solution. The molecular weight distribution of the solution in which the sample was adjusted was measured under the conditions of a column temperature of 40°C, a flow rate of 0.2 ml/min, and "RI-104" manufactured by Showa Denko K.K. as a refractive index detector.

The nylon-6 fiber of the present invention has weight-average molecular weight (Mw)/number-average molecular weight (Mn) of 3.4 or less. The ratio, weight-average molecular weight (Mw)/number-average molecular weight (Mn), is an index of the spread of low-molecular-weight components, and a smaller value thereof indicates a smaller amount of low-molecular-weight impurities derived from monomers and oligomers. Within such a range, raw yarn physical properties equivalent to those of virgin type nylon-6 fibers can be obtained, favorable continuous strength-elongation product and CV% of continuous strength-elongation product are obtained, and a nylon-6 fiber excellent in high-order passability can be obtained. When Mw/Mn exceeds 3.4, CV% of the continuous strength-elongation product increases, and when the fiber is subjected to high-order processing, yarn breakage or the like starting from the point locally having a low strength-elongation product is caused, so that high-order passability is impaired. The ratio is preferably 2.9 to 3.2.

The nylon-6 fiber of the present invention has z-average molecular weight (Mz)/weight-average molecular weight (Mw) of 1.6 or less. The ratio, z-average molecular weight (Mz)/weight-average molecular weight (Mw), is an index of the spread of high-molecular-weight components, and a smaller value thereof indicates a smaller amount of high-molecular-weight components. Within such a range, raw fiber physical properties equivalent to those of virgin type nylon-6 fibers can be obtained, generation of a thermally degraded product is suppressed, a good amino end group content CV% is obtained, and a high-quality woven or knitted fabric for clothing having no dyeing difference when subjected to dyeing can be obtained. When Mz/Mw is more than 1.6, a large amount of the thermally degraded product is produced, so that the amino end group content CV% increases, and when the product is subjected to dyeing, a dyeing difference occurs, resulting in a woven or knitted fabric for clothing having a poor appearance. In addition, the continuous strength-elongation product tends to decrease and the CV% tends to increase, and at the time of high-order processing, yarn breakage and the like tend to occur, and high-order passability tends to be impaired. The ratio is preferably 1.55 to 1.58.

The amino end group content of the nylon-6 fiber according to the present invention is preferably $3.5 \times 10^{-5}$ mol/g or more. The content is more preferably $4.0 \times 10^{-5}$ to $5.5 \times 10^{-5}$ mol/g. Within such a range, excellent color developability can be obtained with general dyes (acid dyes) and methods (normal pressure dyeing) used in dyeing processing. The amino end group content CV% indicating the variation in the amino end group content in the longitudinal direction of the fiber is preferably 4.0% or less. Within such a range, it is possible to obtain a high-quality woven or knitted fabric for clothing having no dyeing difference regardless of toning when subjected to dyeing.

The nylon-6 fiber of the present invention preferably has a total fineness of 3 to 200 dtex, more preferably 10 to 150 dtex. Within such a range, even when the material-recycled polycaproamide resin pellets are used, raw yarn physical properties and quality equivalent to those of virgin type nylon-6 fibers can be obtained, and a woven or knitted fabric having a texture suitable for clothing applications can be obtained.

The nylon-6 fiber of the present invention preferably has a single yarn fineness of 0.2 to 10 dtex, more preferably 0.4 to 5 dtex. Within such a range, even when the material-recycled polycaproamide resin pellets are used, raw yarn physical properties and quality equivalent to those of virgin type nylon-6 fibers can be obtained, and a woven or knitted fabric having a texture suitable for clothing applications can be obtained.

In the nylon-6 fiber of the present invention, the CV% of the continuous strength-elongation product is preferably 3.5% or less. The lower the CV% of the continuous strength-elongation product, the smaller the variation in the tensile strength-elongation curve in the longitudinal direction of the fiber, and when the CV% is in such a range, there is no weak yarn having a locally low strength-elongation product, and when the fiber is subjected to high-order processing, stable high-order passability without yarn breakage can be obtained. In addition, since the fiber structure is also stable, a high-quality woven or knitted fabric for clothing having no dyeing difference regardless of the toning is obtained.

The average value of the continuous strength-elongation product is preferably 6.4 or more. Within such a range, stable high-order passability can be obtained without yarn breakage at the time of high-order processing. Furthermore, the minimum value of the continuous strength-elongation product is preferably 5.5 or more. As the minimum value is lower, a point having a locally low strength-elongation product becomes a weak yarn portion, and yarn breakage or the like is easily caused from the point as a starting point. However, with such a range, stable high-order processability without yarn breakage can be obtained even at the time of high-order processing.

The continuous strength-elongation product in the present invention is measured by drawing a 50-times tensile strength-elongation curve of a fiber sample under a constant rate elongation condition, a grip interval of 50 cm, and a tensile speed of 50 cm/min according to JIS L 1013 (2010) using "Tensilon" (registered trademark) manufactured by Orientec Co., Ltd. (total length: 25 m). The force was calculated from the point showing the maximum force in the tensile strength-elongation curve, and the elongation was calculated from the elongation at the point showing the maximum force. In addition, for the strength, the value obtained by dividing the maximum strength by the total fineness was defined as strength. The strength-elongation product was determined using the following equation, and the minimum value and the average value of individual values of measurement performed 50 times were determined, and CV% was calculated using the following equation.

```
Continuous strength-elongation product = strength [cN/dtex]

× (1 + elongation [%]/100)

CV% = (standard deviation of continuous strength-elongation

product)/(average value of continuous strength-elongation)

× 100.
```

The color tone (YI value) of the nylon-6 fiber of the present invention is preferably 15 or less. A polyamide is a polymer that is easily oxidized and has a characteristic that it is easily oxidized and easily yellows when exposed to oxygen in the air in a state of being hot. In general, polyamide scraps generated in the fiber production process are often hot and are more or less yellowed. When the YI value is more than 15, even if the fiber is not oxidized and deteriorated to such an extent that the physical properties of the fiber are poor, the fiber is yellowed, so that the application may be significantly limited. By suppressing the value within such a range, the application to a woven or knitted fabric for clothing is possible without limitation of use.

The YI value was measured by winding the obtained nylon-6 fiber around a plastic plate and using a multi-light source spectrocolorimeter (manufactured by Suga Test Instruments Co., Ltd.).

The nylon-6 fiber in the present invention can be suitably used for a woven or knitted fabric for clothing. As a woven or knitted fabric for clothing, it can be used in a wide range of fields such as outerwear and underwear.

The polycaproamide in the present invention is a kind of polyamide in which what is called a hydrocarbon is linked to the main chain via an amide bond, and the amount of the caprolactam unit constituting the polycaproamide is 90 mol% or more, preferably 95 mol% or more. The other constituent components are not particularly limited as long as the effects of the present invention are not impaired, and examples thereof include undecanelactam and dodecanelactam constituting polyundecanamide, polydodecanamide, and the like and salts in which dicarboxylic acids and diamines are bonded in equal molar amounts to constitute polytetramethylene adipamide, polypentamethylene adipamide, polypentamethylene sebacamide, polyhexamethylene adipamide, polyhexamethylene sebacamide, polyhexamethylene dodecanamide, polyhexamethylene tridecanamide, and the like.

The material-recycled polycaproamide resin pellets of the present invention are polycaproamide resin pellets obtained by melting a polycaproamide waste material. Chemically recycled polycaproamide resin pellets obtained by another recycling method in which a polycaproamide waste material is depolymerized to caprolactam and the caprolactam obtained by the depolymerization is polymerized again are also known, but it is extremely difficult to control the quality of the obtained polycaproamide resin pellets because the depolymerization and repolymerization process is extremely complicated.

The material-recycled polycaproamide resin pellets of the present invention contain 1.5 wt% or less of low polymer components detected by a hot water extraction method. The content is more preferably 1.0 wt% or less. By setting the content of the low polymer components within such a range, the generation of the low polymer components generated at the time of producing a material-recycled polycaproamide fiber (hereinafter referred to as a nylon-6 fiber) using the pellets is suppressed, so that it becomes possible to produce the nylon-6 fiber with good processability with less yarn breakage caused by the low polymer components (such as spinneret contamination). In addition, since the contamination of the spinneret is reduced, it is possible to extend the period of periodic cleaning of the spinneret surface, which is performed in long-term continuous manufacturing. When the content of the low polymer components detected by the hot water extraction method exceeds 1.5 wt%, the generation of the low polymer components generated at the time of producing the nylon-6 fiber using the pellets increases, and yarn breakage caused by the low polymer components (such as spinneret contamination) increases, so that it becomes difficult to produce the nylon-6 fiber with good processability.

In order to make the molecular weight distribution on the low molecular weight side of the nylon-6 fiber of the present invention, that is, weight-average molecular weight (Mw)/number-average molecular weight (Mn), 3.4 or less, it can be controlled by using material-recycled polycaproamide resin pellets of the present invention having a low polymer component content of 1.5 wt% or less.

The material-recycled polycaproamide resin pellets of the present invention preferably have a filtration pressure increase rate of 2.0 MPa/hour or less. The rate is more preferably 1.0 MPa/hour or less. The details of the filtration pressure increase rate mentioned here are as described in Example B. Filtration Pressure Increase Rate (Resin Pellet) described later. When the filtration pressure increase rate is 2.0 MPa/hour or less, the increase in the internal pressure of the spinning pack at the time of manufacturing the nylon-6 fiber is suppressed, so that spinning troubles such as leakage from the pack and discharge abnormalities are reduced, and the nylon-6 fiber can be produced with good processability.

The material-recycled polycaproamide resin pellets of the present invention preferably have a 98% sulfuric acid relative viscosity ($\eta r$) of 2.2 to 3.8. The viscosity is more preferably 2.5 to 3.5. When the 98% sulfuric acid relative viscosity ($\eta r$) is 2.2 or more, the nylon-6 fiber can be discharged with an appropriate melt viscosity from a spinneret in production, so that variation in single yarn fineness of the nylon-6 fiber and Uster (U%) abnormality hardly occur. In addition, the strength of the nylon-6 fiber can be maintained. When the 98% sulfuric acid relative viscosity ($\eta r$) is 3.8 or less, the yarn discharged from the spinneret can be taken up by the roller with good stringiness when producing the nylon-6 fiber, and the nylon-6 fiber can be stably produced.

The material-recycled polycaproamide resin pellets of the present invention preferably have an amino end group content of 2.0 to $10 \times 10^{-5}$ mol/g. The content is more preferably 3.0 to $9.0 \times 10^{-5}$ mol/g. When the amino end group content is $2.0 \times 10^{-5}$ mol/g or more, the dyeability of the nylon-6 fiber can be secured when the nylon-6 fiber is dyed with an acid dye or a metal complex dye. When the amino end group content is $10 \times 10^{-5}$ mol/g or less, the nylon-6 fiber can be stably produced without causing an extreme viscosity change when the nylon-6 fiber is produced.

In general, titanium oxide is often used as a matting agent for polyamide fibers, but the material-recycled polycaproamide resin pellets of the present invention may also contain titanium oxide as a matting agent. The titanium oxide content of the material-recycled polycaproamide resin pellets of the present invention may be appropriately set within a range in which the effect of the present invention is not impaired, and a preferable range thereof is 0 to 20 wt%.

The material-recycled polycaproamide resin pellets of the present invention may contain various additives in addition to titanium oxide as long as the effect of the present invention is not impaired. Examples of the additives include a stabilizer such as a manganese compound, a flame retardant, a conductivity imparting agent, and a fibrous reinforcing agent.

The material-recycled polycaproamide resin pellets of the present invention can be handled in the same manner as non-recycled, what is called plain polycaproamide resin pellets. The material-recycled polycaproamide resin pellets of the present invention can be suitably used not only for fiber production but also for various processes such as film processing and injection molding. In particular, the material-recycled polycaproamide resin pellets of the present invention in which low polymer components are reduced to the utmost exhibit an effect particularly from the viewpoint of processability when used for melt spinning that is very strict in production because fibers having a fine fineness are wound at a high speed or the like.

Hereinafter, material-recycled polycaproamide resin pellets and a method for producing a material-recycled nylon-6 fiber of the present invention will be described.

The polycaproamide waste material used in the production of the material-recycled polycaproamide resin pellets of the present invention is made of polycaproamide fiber scraps generated in the fiber production process. As described in Patent Document 1 and Patent Document 2, in the material recycling of polyamides, polymer scraps generated in a fiber production process are generally used together, but polycaproamide generates many low polymer components by melting. For this reason, when polycaproamide is melted and the material is recycled, it is extremely important to remove the low polymer components in advance, and as described later, hot water extraction is performed to remove the low polymer components before melting the scraps and recycling the material. In this hot water extraction process, as the specific surface area of the scraps increases, the low polymer components are efficiently removed. However, when the shapes of the polymer scraps and the fiber scraps are compared, the polymer scraps are often in a clumpy shape, and the specific surface area is smaller than that of the fiber scraps. Therefore, it is difficult to efficiently remove the low polymer components from the polymer scraps. Of course, it is ideal to cut and pulverize the polymer scraps to the fineness of the fiber scraps, but this is not practical.

The polycaproamide fiber scraps used in the production of the material-recycled polycaproamide resin pellets of the present invention are generated in a fiber production process, and examples thereof include fiber scraps (swept scraps) generated after attachment of a spinneret and before collection as a fiber product such as a drum package, fiber scraps (broken yarn scraps) generated due to yarn breakage troubles or the like in a spinning process, a stretching process, or the like, and scraps (product scraps) that are obtained as a final form of a fiber product such as a drum package, have an abnormal weight, and have failed in product selection. Any fiber scraps can be suitably used.

As described above, the material-recycled polycaproamide resin pellets of the present invention may contain various additives such as titanium oxide, but for example, in order to set the content of titanium oxide within a desired range, the content of titanium oxide in the polycaproamide fiber scraps used for this production must be known. In order to make it known, it is important not to mix polycaproamide fiber scraps having different titanium oxide contents at the time of collecting the polycaproamide fiber scraps and the like. However, in view of the fiber production process, it may be difficult to deal with swept scraps, broken yarn scraps, and the like. In this case, product scraps that are easy to classify polycaproamide fiber scraps having different titanium oxide contents may be used. When the content of titanium oxide contained in the fiber scraps alone does not reach the content of titanium oxide in the material-recycled polycaproamide resin pellets of the present invention, titanium oxide may be further added.

The production process of the material-recycled polycaproamide resin pellets of the present invention includes steps of cutting fiber scraps, immersing the fiber scraps in hot water, melting, filtering, and discharging the fiber scraps, water-cooling and cutting the discharged resin, and immersing the resin pellets in hot water. Each of the steps will be described below.

The polycaproamide fiber scraps generated in the fiber production process are cut before being subjected to the immersion in hot water/dehydration step, regardless of whether the polycaproamide fiber scraps are swept scraps, broken yarn scraps, or product scraps. This is to facilitate the handling of the fiber scraps when the fiber scraps are subjected to the immersion in hot water/dehydration step or the subsequent melting/filtering/discharging step. If the fiber scraps are not cut to an appropriate length, the fiber is entangled in the dehydration step, and normal dehydration cannot be performed, or when the fiber scraps are provided to a melting hopper, the fiber scraps are not normally supplied to the melting portion, and melting failure occurs. The length of the polycaproamide fiber scraps to be cut may be any length as long as the fiber scraps can be easily handled, and this is appropriately set according to a dehydrator, a melting facility, and the like, but the polycaproamide fiber scraps may be cut to a length of about 0.1 to 1.0 m.

Further, among the swept scraps, the broken yarn scraps, and the product scraps, the swept scraps and the broken yarn scraps may be clumpy because of fusion of fibers to each other. Since the scraps having such a shape have a specific surface area smaller than that of the fiber scraps, the low polymer components cannot be efficiently removed by hot water extraction. Therefore, in the case of using the swept scraps or the broken yarn scraps, the clumpy scraps are selected and removed in advance. When it is difficult to select and remove such scraps, only the product scraps may be used.

The cut fiber scraps are subjected to the immersion in hot water/dehydration step. Polycaproamide produces a large amount of low polymer components by melting. For this reason, when polycaproamide is melted and the material is recycled, it is extremely important to remove the low polymer components in advance, and the scraps are immersed in hot water to remove the low polymer components by hot water extraction before melting the scraps and recycling the material. The hot water temperature at the time of immersion in hot water is 50 to 90°C. The temperature is preferably 70 to 90°C.

By setting the hot water temperature within such a range, the low polymer components are efficiently removed from the fiber scraps, and as a result, it is possible to produce material-recycled polycaproamide resin pellets having a low polymer component content of 1.5 wt% or less, and it is possible to regulate weight-average molecular weight (Mw)/number-average molecular weight (Mn) of the nylon-6 fiber to be obtained to 3.4 or less. When the hot water temperature is lower than 50°C, the low polymer components are not efficiently removed from the fiber scraps, and it is difficult to produce material-recycled polycaproamide resin pellets having a low polymer component content of 1.5 wt% or less. At a hot water temperature up to 90°C, the higher the hot water temperature is, the more efficiently the low polymer components can be removed from the fiber scraps. However, even when the hot water temperature exceeds 90°C, the removal efficiency of the low polymer components is not improved any more. The washing (extraction) temperature in the deoiling step of polyamide fiber scraps described in Patent Document 3 is unclear, and the step is effective in removing foreign matters derived from an oil but is insufficient in removing low polymer components contained in the polyamide fiber scraps. As a result, a large amount of low polymer components is contained in the obtained material-recycled polyamide resin pellets.

The bath ratio at the time of immersing the cut fiber scraps in hot water only needs to be enough to enable easy extraction of low polymer components from the fiber scraps, and this is appropriately set according to an extraction facility, a production batch amount at the time of producing material-recycled polyamide resin pellets, and the like and may be about 1 : 3 to 1 : 10 in terms of fiber scrap weight : hot water weight. The bath ratio referred to herein is a weight ratio of the hot water to the weight of the fiber scraps, and for example, when the hot water is 3 kg relative to 1 kg of the fiber scraps, the bath ratio is 1 : 3.

The immersion time when the cut fiber scraps are immersed in hot water is preferably 20 to 60 minutes. The time is more preferably 30 to 60 minutes. When the immersion time is 20 minutes or more, the low polymer components are efficiently removed from the fiber scraps, and as a result, it is possible to produce material-recycled polycaproamide resin pellets having a low polymer component content of 1.5 wt% or less, and it is possible to regulate weight-average molecular weight (Mw)/number-average molecular weight (Mn) of the nylon-6 fiber to be obtained to 3.4 or less. With an immersion time up to 60 minutes, the longer the immersion time is, the more efficiently the low polymer components can be removed from the fiber scraps. However, even when the immersion time exceeds 60 minutes, the removal efficiency of the low polymer components is not improved any more.

When the fiber scraps are immersed in hot water, yellowing due to contact with oxygen contained in water is extremely likely to proceed because the fiber scraps have a shape having a large surface area. In addition, yellowing of nylon-6 fibers caused by thermal history progresses relatively quickly among polyamides. Therefore, it is preferable to add a reducing agent to the extraction water to decompose the dissolved oxygen in the water to suppress yellowing. The reducing agent is only required to be a compound capable of regulating the YI value of the nylon-6 fiber to 15 or less. Among them, compounds such as hydrazine hydrate and hydrazine carbonate are preferable.

The reducing agent is preferably added in an amount of 0.003 to 0.01 wt% with respect to the amount of extraction water. When the amount is 0.003 wt% or more, the YI value can be preferably regulated to 15 or less.

The fiber scraps after extraction with hot water are rinsed and then dehydrated. The dehydration may be performed until the moisture content of the fiber scraps reaches 5 to 15 wt%.

The fiber scraps after extraction with hot water are subjected to a melting/filtering/discharging step. Examples of the melting method include a method using a pressure melter or an extruder, and any melting method can produce material-recycled polycaproamide resin pellets. Further, the extruder may be either a single-screw type or a twin-screw type. The melting temperature at the time of melting the fiber scraps is preferably 240 to 300°C. When the melting temperature is 240°C or more, there is no occurrence of non-melting, and it is possible to stably produce material-recycled polycaproamide resin pellets without a trouble such as an increase in filtration pressure in a melting system. When the melting temperature is 300°C or less, thermal degradation of the material-recycled polycaproamide resin pellets can be suppressed, and z-average molecular weight (Mz)/weight-average molecular weight (Mw) of the nylon-6 fiber to be obtained can be regulated to 1.6 or less.

It is extremely important to perform filtration along with melting of the fiber scraps. By performing filtration together with melting, foreign matters can be removed from the material-recycled polycaproamide resin pellets. As a result, an increase in the internal pressure of the spinning pack when the material-recycled polycaproamide fiber is produced is suppressed. Therefore, spinning troubles such as leakage from the pack and discharge abnormalities are reduced, and it is possible to produce the material-recycled polycaproamide fiber with good processability. As the filtration filter, it is preferable to use a filtration filter having a filtration accuracy of 5 to 50 um. When the filtration accuracy is 5 um or more, the fiber scraps can be stably melted without increasing the pressure due to clogging of the filter in the melting system. When the filtration accuracy is 50 um or less, foreign matters can be removed from the material-recycled polycaproamide resin pellets. Regarding the filtration filter, any filter such as a wire mesh filter, a metal nonwoven filter, and a metal short fiber filter can be used as long as the filtration is performed normally.

Since the material-recycled polycaproamide resin pellets of the present invention are also used for melt spinning that is very strict in production because, for example, fibers having a fine fineness is wound at a high speed, it is preferable to perform filtration to the utmost limit to remove foreign matters from the material-recycled polycaproamide resin pellets as completely as possible. In order to remove the foreign matters as completely as possible, the opening of the filtration filter may be made small. However, when fiber scraps containing a large amount of additives represented by titanium oxide are melted, simply making the opening of the filtration filter small may cause a pressure increase due to filter clogging in the melting system and make it difficult to stably melt the fiber scraps. In this case, filtration is preferably performed in two or more steps. When filtration is performed in two or more steps, the opening of the filtration filter is gradually reduced to increase the filtration accuracy. For example, when filtration is performed in two steps, a filtration filter having an opening of 10 to 50 um may be used for the first filtration, and a filtration filter having an opening of 5 to 20 $\mu$m, which is smaller than that of the first filtration, may be used for the second filtration. When filtration is performed in two or more steps, filtration filters may be provided at two or more positions in one melting system, or pellets may be formed once after melting and filtration, and the pellets may be melted and filtered again.

The melting and filtration time is 3 min/kg or less. When the time is 3 min/kg or less, thermal degradation of the material-recycled polycaproamide resin pellets can be suppressed because of the thermal history received by melting and filtration, and z-average molecular weight (Mz)/weight-average molecular weight (Mw) of the nylon-6 fiber to be obtained can be regulated to 1.6 or less. In addition, an increase in viscosity associated with the thermal history can be suppressed, and the amino end group content CV% in the longitudinal direction of the fiber can also be regulated to 4.0% or less.

The melted and filtered material-recycled polycaproamide resin is discharged from a spinneret to be pelletized. When the resin is discharged from the spinneret, the resin is preferably discharged so as to have a diameter of 1 to 3 mm as pellets in order to efficiently perform hot water extraction of the polycaproamide resin pellets described later.

The material-recycled polycaproamide resin discharged from the spinneret is subjected to a water cooling/cutting step. As the water cooling of the material-recycled polycaproamide resin, it is sufficient to cool the material-recycled polycaproamide resin to such an extent that the material-recycled polycaproamide resin can be easily cut. Cutting of the material-recycled polycaproamide resin may be performed by a known method, but it is preferable to cut the material-recycled polycaproamide resin into a length of 1 to 4 mm in order to efficiently perform hot water extraction of the polycaproamide resin pellets described later.

The material-recycled polycaproamide resin pellets are subjected to the step of immersion in hot water. Polycaproamide produces a large amount of low polymer components by melting. For this reason, when polycaproamide is melted and the material is recycled, it is extremely important to remove the low polymer components, and the pellets are immersed in hot water also after pelletization to remove the low polymer components by hot water extraction. The hot water temperature at the time of immersion in hot water is 50 to 90°C. The temperature is preferably 70 to 90°C. By setting the hot water temperature within such a range, it is possible to produce material-recycled polycaproamide resin pellets having a low polymer component content of 1.5 wt% or less, and it is possible to regulate weight-average molecular weight (Mw)/number-average molecular weight (Mn) of the nylon-6 fiber to be obtained to 3.4 or less. When the hot water temperature is lower than 50°C, it is difficult to produce material-recycled polycaproamide resin pellets having a low polymer component content of 1.5 wt% or less. At a hot water temperature up to 90°C, the higher the hot water temperature is, the more efficiently the low polymer components can be removed from the material-recycled polycaproamide resin pellets. However, even when the hot water temperature exceeds 90°C, the removal efficiency of the low polymer components is not improved any more.

The bath ratio at the time of immersing the material-recycled polycaproamide resin pellets in hot water only needs to be enough to enable easy extraction of low polymer components from the material-recycled polycaproamide resin pellets, and this is appropriately set according to an extraction facility, a production batch amount at the time of producing material-recycled polyamide resin pellets, and the like and may be about 1 : 3 to 1 : 10 in terms of pellet weight : hot water weight.

The immersion time when the material-recycled polycaproamide resin pellets are immersed in hot water is preferably 20 to 60 minutes. The time is more preferably 30 to 60 minutes. When the immersion time is 20 minutes or more, the low polymer components are efficiently removed from the material-recycled polycaproamide resin pellets, and as a result, it is possible to produce material-recycled polycaproamide resin pellets having a low polymer component content of 1.5 wt% or less. With an immersion time up to 60 minutes, the longer the immersion time is, the more efficiently the low polymer components can be removed from the material-recycled polycaproamide resin pellets. However, even when the immersion time exceeds 60 minutes, the removal efficiency of the low polymer components is not improved any more.

When the pellets are immersed in hot water, it is preferable to add a reducing agent in the same manner as in the case of fiber scraps.

The nylon-6 fiber of the present invention is produced by a production process using a mixing device that measures and mixes material-recycled polycaproamide resin pellets and virgin polycaproamide resin pellets, performing drying in order to adjust the moisture content to a predetermined value, and including what is called normal melt spinning, cooling, oiling, and stretching. The melt spinning device used in the present invention can be used in either an extruder spinning machine or a pressure melter spinning machine. In the case of adding a colorant, pellets obtained by mixing master pellets to which a colorant is added at a high concentration with base pellets may be charged into a spinning machine, or each type of pellets may be charged while being weighed immediately above the spinning machine. The colorant may be directly charged into the spinning machine in a powder or liquid state.

The nylon-6 fiber of the present invention is obtained by melting the above-described material-recycled polycaproamide resin pellets and virgin polycaproamide resin pellets in combination at a specific ratio and discharging and spinning them from a spinneret. In particular, in order to regulate the molecular weight distribution on the high molecular weight side, that is, z-average molecular weight (Mz)/weight-average molecular weight (Mw), to 1.6 or less, melt spinning is performed under an appropriate moisture content of the resin pellets and appropriate filtration conditions. Details are described below.

For the polycaproamide resin pellets used for the production of the nylon-6 fiber of the present invention, the moisture content in the resin pellets is adjusted to 600 to 1,000 ppm in the drying step. The content is preferably 700 to 900 ppm. It is known that the polycaproamide resin polymer undergoes a polymerization reaction due to residence during melt spinning, its viscosity increases, and the amino end group content decreases. Therefore, by setting the moisture content in the polycaproamide resin pellets to 600 to 1,000 ppm and controlling the polymerization equilibrium reaction, it is possible to suppress an increase in viscosity of the polymer resident in the spinning pipe and to suppress a decrease in the amino end group content. Since a thermally degraded product is easily produced as the viscosity of the polymer increases, z-average molecular weight (Mz)/weight-average molecular weight (Mw) can be regulated to 1.6 or less. Further, since the variation in the amino end group content due to the increase in viscosity can also be suppressed, it is possible to obtain a high-quality woven or knitted fabric for clothing having no dyeing difference when subjected to dyeing. When the moisture content in the polycaproamide resin pellets is less than 600 ppm, the viscosity of the polymer resident in the spinning pipe gradually increases, so that z-average molecular weight (Mz)/weight-average molecular weight (Mw) and the amino end group content CV% also increase. When the chip moisture content is more than 1,000 ppm, the hydrolysis of the polymer resident in the spinning pipe is promoted, the viscosity of the polymer is extremely lowered and varies, the polymer cannot be stably discharged, and the continuous strength-elongation product CV% increases. At the time of high-order processing, yarn breakage or the like starting from the point locally having a low strength-elongation product is caused, so that high-order passability is impaired.

In the production of the nylon-6 fiber of the present invention, the melt spinning temperature for melting is preferably 240 to 300°C. Within such a range, stable discharge can be performed, and thermal deterioration of the polymer can be suppressed.

The melt spinning pack used in the production of the nylon-6 fiber of the present invention is a melt spinning pack in which at least a spinneret, a pressure resistant plate, a filtration filter, and a sand filter medium layer or a baffle plate are arranged, and a sintered filter made of metal short fibers having a substantially polygonal cross section is used as the filtration filter between the filtration filter and the sand filter medium layer or the baffle plate.

In the nylon-6 fiber, a thermally degraded product of a polymer is generated by a thermal history received at a stage of re-melting polyamide fiber scraps or polymer scraps generated in a fiber production process to form material-recycled polycaproamide resin pellets. Thermal degraded products of the polymer are removed as completely as possible at the stage of producing resin pellets but may remain in the resin pellets. For example, in the recycled polyamide crimped fiber described in Patent Document 1, thermally degraded products remain, and when the polyamide crimped fiber is used in a woven or knitted fabric for clothing intended by the present invention, the amino end group content varies, which causes a dyeing difference.

In order to subdivide the thermally degraded product of the polymer and reduce the molecular weight distribution on the high molecular weight side, it is necessary to increase the filtration accuracy of the filtration filter, the sand filter medium layer, or the baffle plate constituting the melt spinning pack and to use a sintered filter made of metal short fibers having a substantially polygonal shape as the filtration filter. By using such a member, entanglement between the metal short fibers occurs, and filterability and dispersibility can be improved. The substantially polygonal shape is preferably a shape having an acute cross-sectional shape. This is because thermally modified, the thermally degraded products of the polymer can be finely dispersed by collision with an acute angle portion of the cross section, and the thermally modified gelled polymer can be further finely subdivided by making the cross-sectional shape acute. The filtration accuracy of the sintered filter made of the short metal fibers is 5 to 20 um although it depends on the discharge amount. By setting the filtration accuracy of the sintered filter made of metal short fibers to such a range, the thermally degraded product can be finely dispersed, and z-average molecular weight (Mz)/weight-average molecular weight (Mw) can be regulated to 1.6 or less.

When the filtration accuracy is more than 20 $\mu$m, solid foreign matters that could not be removed at the time of producing the material-recycled polycaproamide resin pellets are discharged in a state of being mixed in the fiber without being sufficiently filtered, and not only z-average molecular weight (Mz)/weight-average molecular weight (Mw) exceeds 1.6 but also the points at which the solid foreign matters are present locally have low strength-elongation products, and the continuous strength-elongation product CV% increases. At the time of high-order processing, yarn breakage or the like is caused, so that high-order passability is impaired. In addition, the filterability and dispersibility in the melt spinning pack are lowered, and the amino end group content CV% is also increased by the produced thermally degraded products, resulting in a dyeing difference.

The nylon-6 fiber of the present invention can be spun using a general spinneret in which a predetermined number of discharge holes and a hole diameter and a hole length that enable stable discharge are designed according to a target fineness and the number of filaments.

The melt-spun yarn is cooled and solidified with cold air, then an oil is applied to the yarn, and then the yarn is taken up with a take-up roller rotating at a predetermined take-up speed. The take-up speed is preferably 300 to 4000 m/min. The taken-up yarn is usually successively stretched. As another method, a method of once winding an unstretched yarn and then performing stretching in a separate step or a method of once winding a stretched yarn and then performing crimping in a separate step is also possible.

The nylon-6 fiber of the present invention is preferably stretched at a stretch ratio of 1.0 to 4.0 to have an elongation of 30 to 100%.

EXAMPLES

Next, the present invention will be described more specifically with reference to working examples, but the present invention is not limited to these working examples. Measurement methods and the like of the characteristic values in the examples are as follows.

A. Low Polymer Component Content

(1) After pulverizing resin pellets, the pulverized pellets were sieved with wire mesh filters of 35 mesh (opening: 420 um) and 115 mesh (opening: 125 $\mu$m), and a powder that passed through the 35-mesh filter and remained on the 115-mesh filter was separated.
(2) The powder obtained in the above section (1) was dried until the moisture content became 0.03 wt% or less, and then about 3 g of the powder was weighed (W1).
(3) The powder weighed in the section (2) was subjected to extraction with 10 L or more of boiling water for 4 hours.
(4) The powder obtained in the above section (3) was washed with water, dried until the moisture content became 0.03 wt% or less, and weighed (W2).
(5) Calculation was performed from W1 and W2 using the following equation.

$$\mathtt{Low\ polymer\ component\ content\ (wt\%)\ =\ (W1\ -\ W2)/W1\ \times\ 100.}$$

B. Filtration Pressure Increase Rate (Resin Pellet)

(1) As for the temperature of the resin pellet melting part of the melt tester for determining the filtration pressure increase rate, the melting part heater was set to 280°C, the heat reserving cylinder heater was set to 285°C, and the preheating of the spinneret was set to 260°C.
(2) As a filtration filter, DF 40D (40$\varphi$) (model number: NF2M-5C3 (with AL rim)) manufactured by Nippon Seisen Co., Ltd. was used. The opening corresponds to a cut of 5 um, and the actual filtration portion has a diameter of 30$\varphi$.
(3) Resin pellets dried until the moisture content became 0.03 wt% or less were discharged at 4 g/min.
(4) The filtration pressure (MPa) one hour after the start of discharge was determined (P1).
(5) The filtration pressure (MPa) three hours after the start of discharge was determined (P2).
(6) Calculation was performed from P1 and P2 using the following equation.

$$\mathtt{Filtration\ pressure\ increase\ rate\ (MPa/hour)\ =\ (P2\ -\ P1)/2.}$$

C. 98% Sulfuric Acid Relative Viscosity ($\eta r$)

After 0.25 g of resin pellets were dissolved so as to be 1 g per 100 ml of 98% sulfuric acid, the flow time (T1) at 25°C was measured with the use of an Ostwald viscometer. Subsequently, the flow time (T2) of 98% sulfuric acid alone was measured. The ratio of T1 to T2, that is, T1/T2, was defined as the 98% sulfuric acid relative viscosity ($\eta r$).

D. Amino End Group Content

In 50 mL of a phenol/ethanol mixed solution (phenol/ethanol = 83.5/16.5), 1 g of resin pellets or a fiber was dissolved by shaking at 25°C to obtain a solution. This solution was subjected to neutralization titration with 0.02-N hydrochloric acid, and the amount of 0.02-N hydrochloric acid required for the neutralization titration was determined. The phenol/ethanol mixed solvent alone was subjected to neutralization titration with 0.02-N hydrochloric acid to determine the amount of 0.02-N hydrochloric acid required for the neutralization titration. Then, from the difference, the amino end group content per ton of the resin pellets or fiber was determined.

For the amino end group content of the fiber, sampling was performed from a portion obtained by dividing the outermost layer and the innermost layer of the fiber package into five equal parts, and CV% was calculated using the following equation.

$$CV\% = (\text{standard deviation of amino end group content})/(\text{average value of amino end group content}) \times 100.$$

E. Number of Times of Yarn Breakages

It is the number of times of yarn breakages in the example <Production of Polycaproamide Fiber (Melt Spinning)> described later. Evaluation was performed using five tons or more of polycaproamide resin pellets, and the number of times of yarn breakages per ton was determined. The number of times of yarn breakages of 2.0 times/ton or less was regarded as acceptable.

F. Time Until Yarn Breaks

In the example <Production of Polycaproamide Fiber (Melt Spinning)> described later, the time from the start of winding until yarn breakage occurred was measured for each spinning pack (number N = 12), and the average thereof was determined.

G. Filtration Pressure Increase Rate (Melt Spinning)

It is the filtration pressure increase rate of the spinning pack in the example <Production of Polycaproamide Fiber (Melt Spinning)> described later. The evaluation was performed by passing a molten polymer continuously for five days or more, and the filtration pressure increase rate per day was determined.

H. Total Fineness and Single Yarn Fineness

An initial load of nominal fineness $\times$ 0.45 mN/dtex was applied to a fiber in accordance with JIS L 1013 (2010) 8.3.1 Fineness based on corrected mass a) Method A using a sizing reel manufactured by Nakayama Denki Sangyo K.K., and measurement was performed at a predetermined yarn length of 100 m, and the measured value was taken as the total fineness. The fineness was divided by the number of filaments to determine the single yarn fineness.

I. Continuous Strength-Elongation Product and CV%

A fiber was measured 50 times in a temperature control room at an air temperature of 20°C and a humidity of 65% under a constant rate elongation condition, a grip interval of 50 cm, and a tensile speed of 50 cm/min according to JIS L 1013 (2010) using "Tensilon" (registered trademark) manufactured by Orientec Co., Ltd. (total length: 25 m). The force was calculated from the point showing the maximum force in the tensile strength-elongation curve, and the elongation was calculated from the elongation at the point showing the maximum force. In addition, for the strength, the value obtained by dividing the maximum force by the total fineness was defined as strength. The strength-elongation product was determined using the following equation, and the minimum value and the average value of individual values of measurement performed 50 times were determined, and CV% was calculated.

$$\text{Continuous strength-elongation product} = \text{strength [cN/dtex]} \times (1 + \text{elongation [\%]}/100)$$

$$\text{CV\%} = (\text{standard deviation of strength-elongation product})/(\text{average value of strength-elongation}) \times 100.$$

J. Number-Average Molecular Weight (Mn), Weight-Average Molecular Weight (Mw), and z-Average Molecular Weight (Mz)

The molecular weight distribution was determined by gel permeation chromatography (GPC). Specifically, a gel permeation chromatograph GPC was used as an apparatus, and one "Shodex HEIP-G" manufactured by Showa Denko K.K. and two "Shodex HEIP-606M" manufactured by Showa Denko K.K. were used as columns. In addition, hexafluoroisopropanol added with 5 mM of sodium trifluoroacetate was used as a measurement solvent, 3 mg of polymethyl methacrylate (PMMA) manufactured by Showa Denko K.K. as a standard sample and 3 mg of a fiber were used, and the mixture was gently stirred at room temperature and then filtered using a 0.45-um filter to adjust a solution. The molecular weight distribution of the solution in which the sample was adjusted was measured under the conditions of a column temperature of 40°C, a flow rate of 0.2 ml/min, and "RI-104" manufactured by Showa Denko K.K. as a refractive index detector.

The definition of each average molecular weight is as follows. Here, Mi is the molecular weight at each elution position of the GPC curve obtained through the molecular weight calibration curve, and Ni is the number of molecules.

$$\text{Number-average molecular weight Mn } \text{Mn} = \Sigma\ (\text{Ni} \times \text{Mi})/\Sigma\text{Ni}$$

$$\text{Weight-average molecular weight Mw } \text{Mw} = \Sigma\ (\text{Ni} \times \text{Mi2})/\Sigma\ (\text{Ni} \times \text{Mi})$$

$$\text{z-Average molecular weight Mz } \text{Mz} = \Sigma\ (\text{Ni} \times \text{Mi3})/\Sigma\ (\text{Ni} \times \text{Mi2})$$

Variance ratio    Mw/Mn
Variance ratio    Mz/Mw

Mn is an average value related to low molecular weight components, and Mz is an average value related to high molecular weight components. In addition, Mw/Mn is an index of the spread on the low molecular weight side, and Mz/Mw is an index of the spread on the high molecular weight side.

K. Moisture content

Resin pellets were put into a trace moisture meter, moisture was vaporized under the conditions of 230°C and 30 minutes, and the moisture value was read and measured, and the measured value was taken as the moisture content.

L. YI value

The YI value was calculated from an average value of three values measured by winding the obtained nylon-6 fiber around a plastic plate and using a multi-light source spectrocolorimeter (manufactured by Suga Test Instruments Co., Ltd.).

M. Product Quality (Streak Quality due to Dyeing Difference/Yarn Physical Property Difference)

The dyeing difference and streak quality and the color tone of a woven fabric were determined by visual determination by an experienced inspector and scored in the following three grades. The product quality was comprehensively evaluated using the total score of the quality and the color tone.

M-1. Dyeing Difference and Streak Quality

Two points: The woven fabric has excellent quality without dyeing difference or streak.
One point: The woven fabric has slight dyeing difference or streaks but has no problem in use as a product.
Zero points: The woven fabric has defects such as dyeing differences and streaks and cannot be used as a product.

M-2. Color Tone

Two points: A desired color tone comes out, and excellent quality is obtained.
One point: The color developability is slightly poor, but there is no problem for use as a product.
Zero points: Color developability is poor, and the woven fabric cannot be used as a product.

M-3. Product Quality (Comprehensive Evaluation)

A: Three to four points: acceptable product
C: Zero to two points: unacceptable product
N. High-Order Passability

Using a water jet loom, the number of times the loom stops due to yarn breakage when 10 pieces (1,000 m/piece) of a plain-weave fabric was woven at a loom rotation speed of 750 rpm and a weft length of 1,620 mm was evaluated according to the following criteria.
A: Less than twice
B: Twice or more and less than six times
C: Six times or more

A and B were defined as acceptable high-order passability.

<Production of Non-recycled Virgin Polycaproamide Resin Pellets>

(Reference Example 1)

A 90-wt% aqueous caprolactam solution and acetic acid as a polymerization modifier at a ratio of 0.002 mol per 1 mol of caprolactam were added to a polymerization can, titanium oxide as another additive was added so as to be 0.3 wt% with respect to polymerized polycaproamide, and polymerization was performed. In the polymerization, the above raw material was heated while being stirred in a sealed state, water vapor was distilled off when the internal pressure became 1 MPa, and the pressure was maintained at that pressure. When the internal liquid temperature reached 250°C, the pressure inside the can was gradually reduced to atmospheric pressure over 70 minutes. The internal liquid temperature at that time was 260°C. Thereafter, nitrogen was allowed to flow into the gas phase portion inside the can for 60 minutes while maintaining the internal liquid temperature at 260°C, and the polymerization was completed. After completion of the polymerization, polycaproamide in a molten state was extruded in a gut form from the bottom of the polymerization can, cooled with water, and then cut with a pelletizer to obtain pellets. The pellets were subjected to extraction with hot water to extract low polymer components.

<Production of Material-Recycled Polycaproamide Resin Pellets>

(Examples 1 to 5, Comparative Examples 3 and 5)

From drum packages of a polycaproamide fiber containing 0.3 wt% of titanium oxide, drum packages that were regarded as unacceptable in weight abnormality or product selection were collected, and then the polycaproamide fiber was cut to 0.1 to 1.0 m.

The cut polycaproamide fiber scraps were charged into an extraction tank, and hot water at a temperature shown in Table 1 was charged such that the bath ratio was 1 : 5 in terms of fiber scrap weight : hot water weight. After immersion for 30 minutes while the hot water temperature shown in Table 1 was maintained and the hot water was circulated with a circulation pump, the fiber scraps were rinsed, and dehydration was performed so that the moisture content became 5 to 15 wt%.

The dehydrated fiber scraps were melted at a temperature of 260°C with a pressure melter, and the molten polymer was introduced into a single-screw extruder. The melting temperature in the extruder was set to 260°C, melting was performed while maintaining a tip pressure of 8 MPa, and filtration was performed through a metal nonwoven filter with filtration accuracy shown in Table 1. The filtered molten polymer was once pelletized by being discharged from a spinneret, cooled with water, and cut, and then melted with a single-screw extruder at a melting temperature of 260°C while maintaining a tip pressure of 8 MPa and filtered with a metal nonwoven filter having filtration accuracy shown in Table 1 as the second melting and filtration. The discharge amount was adjusted so that the total melting and filtration time was as shown in Table 1. The filtered molten polymer was discharged from a spinneret, cooled with water, and cut to obtain material-recycled polycaproamide resin pellets having a diameter of 1.2 mm and a length of 2.0 mm.

The obtained material-recycled polycaproamide resin pellets were charged into an extraction tank, and hot water at a temperature shown in Table 1 was charged such that the bath ratio was 1 : 5 in terms of pellet weight : hot water weight. While maintaining the hot water temperature shown in Table 1, immersion was performed for 30 minutes while circulating hot water with a circulation pump.

The low polymer component content, the filtration pressure increase rate, the 98% sulfuric acid relative viscosity (ηr), and the amino end group content of the obtained material-recycled polycaproamide resin pellets were as shown in Table 1.

(Examples 6 and 7)

Material-recycled polycaproamide resin pellets having a diameter of 1.2 mm and a length of 2.0 mm were obtained in the same manner as in Example 1 except that the second melting and filtration were not performed. In Example 7, the tip pressure fluctuated due to melting with the extruder, and leakage of the molten polymer in the molten system was also observed.

The low polymer component content, the filtration pressure increase rate, the 98% sulfuric acid relative viscosity (ηr), and the amino end group content of the obtained material-recycled polycaproamide resin pellets were as shown in Table 1.

(Comparative Example 1)

Material-recycled polycaproamide resin pellets having a diameter of 1.2 mm and a length of 2.0 mm were obtained in the same manner as in Example 1 except that polymer scraps of polycaproamide containing 0.3 wt% of titanium oxide were used as a waste material. The size of the polymer scraps of polycaproamide was not more than 50 mm square, and polymer scraps having sizes of more than 50 mm square were cut to sizes of 50 mm square or less.

The low polymer component content, the filtration pressure increase rate, the 98% sulfuric acid relative viscosity (ηr), and the amino end group content of the obtained material-recycled polycaproamide resin pellets were as shown in Table 1.

(Comparative Example 2)

Material-recycled polycaproamide resin pellets having a diameter of 1.2 mm and a length of 2.0 mm were obtained in the same manner as in Example 1 except that hot water extraction of fiber scraps used as the waste material was not performed.

The low polymer component content, the filtration pressure increase rate, the 98% sulfuric acid relative viscosity (ηr), and the amino end group content of the obtained material-recycled polycaproamide resin pellets were as shown in Table 1.

(Comparative Example 4)

Material-recycled polycaproamide resin pellets having a diameter of 1.2 mm and a length of 2.0 mm were obtained in the same manner as in Example 1 except that hot water extraction of the material-recycled polycaproamide resin pellets was not performed.

The low polymer component content, the filtration pressure increase rate, the 98% sulfuric acid relative viscosity ($\eta$r), and the amino end group content of the obtained material-recycled polycaproamide resin pellets were as shown in Table 1.

<Production of Polycaproamide Fiber (Nylon-6 Fiber) (Melt Spinning)>

(Reference Example 1, Examples 1 to 7, Comparative Examples 1 to 5)

The obtained polycaproamide resin pellets were dried until the moisture content became 300 ppm or less, then put into a melting system having a spin block (spinning thermal insulation box) temperature of 260°C, and melted with a pressure melter at a melting temperature of 265°C. The molten polymer was introduced into a spinning pack incorporating a metal nonwoven filter having a filtration accuracy of 10 um and a spinneret having 10 holes $\times$ 4 groups (40 holes in total) of round holes and discharged so that the discharge amount per spinning pack was 59 g/min.

A gas generated in the periphery of the spinneret was forcibly removed at a suction wind speed of 25 m/min, and a fiber yarn was cooled with cold air at an air temperature of 18°C and a wind speed of 30 m/min. Thereafter, oil was supplied with an oiling device, and entanglement was imparted with an entanglement nozzle device to produce a nylon-6 fiber of 33 dtex and 10 filaments at a winding speed of 4,500 m/min.

The number of times of yarn breakages, the time until yarn breakage, and the filtration pressure increase rate of the spinning pack when the nylon-6 fiber was produced were as shown in Table 1.

[Table 1-1]

| | | Method for producing resin pellets | | | | | | Characteristics of resin pellets | | | |
|---|---|---|---|---|---|---|---|---|---|---|---|
| | | Form of scrap | Scrap hot water temperature | Filtration accuracy of filtration filter | | Pellet hot water temperature | Melting and filtration time | Low polymer component content | Filtration pressure increase rate | 98% sulfuric acid relative viscosity | Amino end group |
| | | | | First time | Second time | | | | | | |
| | | - | (°C) | (μm) | (μm) | (°C) | min/kg | (wt%) | (MPa/hr) | - | × 10⁻⁵mol/g |
| Reference Example | 1 | - | - | - | - | - | - | 1.1 | 0.6 | 2.60 | 5.29 |
| Example | 1 | Fibrous | 80 | 20 | 10 | 80 | 3 | 0.9 | 1.0 | 2.70 | 5.42 |
| | 2 | Fibrous | 50 | 20 | 10 | 80 | 3 | 1.3 | 0.9 | 2.65 | 5.40 |
| | 3 | Fibrous | 90 | 20 | 10 | 80 | 3 | 0.8 | 0.9 | 2.66 | 5.50 |
| | 4 | Fibrous | 80 | 20 | 10 | 50 | 3 | 1.5 | 1.0 | 2.65 | 5.38 |
| | 5 | Fibrous | 80 | 20 | 10 | 90 | 3 | 0.8 | 0.8 | 2.66 | 5.45 |
| | 6 | Fibrous | 80 | 20 | - | 80 | 2 | 0.9 | 2.2 | 2 . 69 | 5.42 |
| | 7 | Fibrous | 80 | 10 | - | 80 | 2 | 0.9 | 1.4 | 2.70 | 5.40 |
| Comparative Example | 1 | Polymeric | 80 | 20 | 10 | 80 | 3 | 1.9 | 1.7 | 2.71 | 5.20 |
| | 2 | Fibrous | - | 20 | 10 | 80 | 3 | 1.8 | 1.2 | 2.61 | 5.33 |
| | 3 | Fibrous | 40 | 20 | 10 | 80 | 3 | 1.6 | 0.9 | 2.65 | 5.39 |
| | 4 | Fibrous | 80 | 20 | 10 | - | 3 | 2.5 | 1.0 | 2.67 | 5.40 |
| | 5 | Fibrous | 80 | 20 | 10 | 40 | 3 | 2.0 | 1.0 | 2.67 | 5.35 |

[Table 1-2]

| | | Melt spinning processability | | | Remarks |
|---|---|---|---|---|---|
| | | Number of times of yarn breakages | Time until yarn breaks | Filtration pressure increase rate | |
| | | (times/ton) | (Hours) | (MPa/day) | |
| Reference Example | 1 | 0.35 | 98 | 0.10 | |
| Example | 1 | 0.36 | 97 | 0.10 | |
| | 2 | 1.65 | 61 | 0.11 | |
| | 3 | 0.37 | 97 | 0.10 | |
| | 4 | 1.84 | 57 | 0.11 | |
| | 5 | 0.36 | 97 | 0.10 | |
| | 6 | 1.27 | 68 | 0.80 | |
| | 7 | 0.76 | 96 | 0.42 | Tip pressure fluctuation, molten polymer leakage |
| Comparative Example | 1 | 4.61 | 36 | 0.23 | |
| | 2 | 4.10 | 41 | 0.12 | |
| | 3 | 2.45 | 47 | 0.11 | |
| | 4 | 8.10 | 12 | 0.13 | |
| | 5 | 5.32 | 23 | 0.12 | |

As is apparent from the results of Table 1, it can be said that the material-recycled polycaproamide resin pellets of the present invention exhibit an extremely remarkable effect from the viewpoint of producing the material-recycled nylon-6 fiber with good processability as compared with conventional material-recycled polycaproamide resin pellets.

In Comparative Example 1, since polymer scraps were used as a waste material, the low polymer component content in the obtained material-recycled polycaproamide resin pellets was increased, and as a result, the number of times of yarn breakages during melt spinning was increased, and the operational stability was poor. This yarn breakage was caused by contamination of the spinneret caused by low polymer components, the time until yarn breakage was also shorter than those in the examples, and it was necessary to clean the surface of the spinneret at short intervals.

In Comparative Examples 2 and 3, since hot water extraction of fiber scraps used as a waste material was insufficient, the low polymer component content in the obtained material-recycled polycaproamide resin pellets was increased, and as a result, the number of times of yarn breakages during melt spinning was increased, and the operational stability was poor. This yarn breakage was caused by contamination of the spinneret caused by low polymer components, the time until yarn breakage was also shorter than those in the examples, and it was necessary to clean the surface of the spinneret at short intervals.

In Comparative Examples 4 and 5, since hot water extraction of the obtained material-recycled polycaproamide resin pellets was insufficient, the low polymer component content in the pellets was increased, and as a result, the number of times of yarn breakages during melt spinning was increased, and the operational stability was poor. This yarn breakage was caused by contamination of the spinneret caused by low polymer components, the time until yarn breakage was also shorter than those in the examples, and it was necessary to clean the surface of the spinneret at short intervals.

(Example 8)

The ratio of the material-recycled polycaproamide resin pellets used was set to 100 wt%. A spinning pack constituted of a spinneret (number of round holes: 20 holes × 3 groups, 60 holes in total), a pressure resistant plate, a filtration filter, and a sand filter medium was used. The filtration filter is a metal short fiber filter (filtration accuracy: 10 um) made of stainless steel short fibers having a substantially polygonal cross section, a length of 1.0 to 3.0 mm, an equivalent diameter of 30 to 60 um, and variations of the aspect ratio of 10 to 100. The material-recycled polycaproamide resin pellets obtained in Example 1 were dried until the moisture content became 800 ppm, then put into a melting system having a spin block (spinning thermal insulation box) temperature of 260°C, and melted with a pressure melter at a melting temperature of 265°C. The molten polymer was guided to the spinning pack and discharged so that the discharge amount per spinning pack was 30 g/min.

A gas generated in the periphery of the spinneret was forcibly removed at a suction wind speed of 25 m/min, and a fiber yarn was cooled with cold air at an air temperature of 18°C and a wind speed of 30 m/min. Thereafter, oil was supplied with an oiling device, and entanglement was imparted with an entanglement nozzle device to produce a nylon-6 fiber of 26 dtex and 20 filaments at a winding speed of 4,000 m/min.

The characteristics of the obtained nylon-6 fiber were as shown in Table 2.

<Production of Woven Fabric>

Using a water jet loom, 10 hiki (1,000 m/hiki) of a plain-weave fabric was woven at a loom rotation speed of 750 rpm and a weft length of 1,620 mm. The high-order passability and the product quality were as shown in Table 2.

(Comparative Examples 6 to 9)

Material-recycled polycaproamide resin pellets were produced in the same manner as in Example 1 except that the fiber scrap hot water temperature, the melting temperature, the melting and filtration time, and the resin pellet hot water temperature were changed as shown in Table 2.

A nylon-6 fiber was produced in the same manner as in Example 8. The results are shown in Table 2.

(Example 9)

A nylon-6 fiber was produced in the same manner as in Example 8 using the material-recycled polycaproamide resin pellets of Example 6 obtained by adjusting the discharge amount so that the melting and filtration time was 2 min/kg and filtering the polymer only once using a metal short fiber filter with a filtration accuracy of 20 um. The results are shown in Table 2.

[Table 2]

| | | | Example 8 | Example 9 | Comparative Example 6 | Comparative Example 7 | Comparative Example 8 | Comparative Example 9 |
|---|---|---|---|---|---|---|---|---|
| Recycling conditions | Scrap hot water temperature | °C | 80 | 80 | 40 | 80 | 80 | 80 |
| | Melting temperature | °C | 260 | 260 | 260 | 310 | 260 | 260 |
| | Filtration accuracy of filtration filter (first time) | µm | 20 | 20 | 20 | 20 | 20 | 20 |
| | Filtration accuracy of filtration filter (second time) | µm | 10 | - | 10 | 10 | 10 | 10 |
| | Melting and filtration time | min/kg | 3 | 2 | 3 | 3 | 8 | 3 |
| | Pellet hot water temperature | °C | 80 | 80 | 80 | 80 | 80 | 40 |
| Characteristics of pellets | Low polymer component content | wt% | 0.9 | 0.9 | 1.6 | 0.9 | 0.9 | 2 |
| | 98% sulfuric acid relative viscosity | - | 2.7 | 2.7 | 2.7 | 3.3 | 3.2 | 2.7 |
| | Amino end group content | $10^{-5}$ mol/g | 5.4 | 5.4 | 5.4 | 3.4 | 3.3 | 5.4 |
| Spinning conditions | Chip moisture content | ppm | 800 | 800 | 800 | 800 | 800 | 800 |
| | Filtration filter | - | Metal short fiber | Metal short fiber | Metal short fiber | Metal short fiber | Metal short fiber | Metal short fiber |
| | Filtration accuracy | µm | 10 | 10 | 10 | 10 | 10 | 10 |
| | Ratio of material-recycled nylon-6 | wt% | 100 | 100 | 100 | 100 | 100 | 100 |
| Raw yarn characteristics | Mw/Mn | - | 3.16 | 3.40 | 3.60 | 3.40 | 3.40 | 3.70 |
| | Mz/Mw | - | 1.57 | 1.59 | 1.60 | 1.70 | 1.75 | 1.59 |
| | Amino end group content | $10^{-5}$ mol/g | 4.9 | 5.0 | 4.4 | 3.2 | 3.4 | 4.5 |
| | Amino end group content CV% | - | 3.4 | 3.4 | 3.9 | 11.0 | 9.1 | 3.5 |
| | Total fineness | dtex | 25.9 | 25.8 | 25.8 | 25.9 | 25.9 | 25.9 |
| | Single yarn fineness | dtex | 1.3 | 1.3 | 1.3 | 1.3 | 1.3 | 1.3 |
| | Continuous strength-elongation product | Average value | 6.5 | 6.1 | 6.2 | 6.3 | 6.4 | 6.0 |
| | | CV% | 2.7 | 3.3 | 4.1 | 3.4 | 3.5 | 3.7 |
| | | Minimum value | 5.8 | 5.6 | 5.1 | 5.8 | 5.8 | 4.9 |
| Evaluation | High-order passability | - | A | A | C | B | B | C |
| | Product quality | - | A | A | A | C | C | A |

(Examples 10 and 11, Comparative Examples 10 and 11)

The same procedure as in Example 8 was carried out except that a nylon-6 fiber was produced with the moisture content of the resin pellets being adjusted as shown in Table 3 in the drying step. The results are shown in Table 3.

(Comparative Example 12)

The same procedure as in Example 8 was carried out except that a nylon-6 fiber was produced with the filtration accuracy of the metal short fiber filter being adjusted as shown in Table 3. The results are shown in Table 3.

(Comparative Example 13)

The same procedure as in Example 8 was carried out except that a nylon-6 fiber was produced with the filtration filter being changed to a metal nonwoven filter having a filtration accuracy of 10 um. The results are shown in Table 3.

[Table 3]

| | | | Example 8 | Example 10 | Example 11 | Comparative Example 10 | Comparative Example 11 | Comparative Example 12 | Comparative Example 13 |
|---|---|---|---|---|---|---|---|---|---|
| Recycling conditions | | Scrap hot water temperature | °C | 80 | 80 | 80 | 80 | 80 | 80 | 80 |
| | | Melting temperature | °C | 260 | 260 | 260 | 260 | 260 | 260 | 260 |
| | | Filtration accuracy of filtration filter (first time) | μm | 20 | 20 | 20 | 20 | 20 | 20 | 20 |
| | | Filtration accuracy of filtration filter (second time) | μm | 10 | 10 | 10 | 10 | 10 | 10 | 10 |
| | | Melting and filtration time | min/kg | 3 | 3 | 3 | 3 | 3 | 3 | 3 |
| | | Pellet hot water temperature | °C | 80 | 80 | 80 | 80 | 80 | 80 | 80 |
| Characteristics of pellets | | Low polymer component content | wt% | 0.9 | 0.9 | 0.9 | 0.9 | 0.9 | 0.9 | 0.9 |
| | | 98% sulfuric acid relative viscosity | – | 2.7 | 2.7 | 2.7 | 2.7 | 2.7 | 2.7 | 2.7 |
| | | Amino end group content | $10^{-5}$mol/g | 5.4 | 5.4 | 5.4 | 5.4 | 5.4 | 5.4 | 5.4 |
| Spinning conditions | | Chip moisture content | ppm | 800 | 600 | 1000 | 500 | 1100 | 800 | 800 |
| | | Filtration filter | – | Metal short fiber | Metal short fiber | Metal short fiber | Metal short fiber | Metal short fiber | Metal short fiber | Nonwoven fabric |
| | | Filtration accuracy | μm | 10 | 10 | 10 | 10 | 10 | 25 | 10 |
| | | Ratio of material-recycled nylon-6 | wt% | 100 | 100 | 100 | 100 | 100 | 100 | 100 |
| Raw yarn characteristics | | Mw/Mn | – | 3.16 | 3.30 | 3.23 | 3.33 | 3.40 | 3.30 | 3.33 |
| | | Mz/Mw | – | 1.57 | 1.59 | 1.55 | 1.61 | 1.63 | 1.62 | 1.65 |
| | | Amino end group content | $10^{-5}$mol/g | 4.9 | 4.6 | 4.6 | 4.0 | 4.5 | 4.8 | 4.7 |
| | | Amino end group content CV% | – | 3.4 | 3.4 | 3.4 | 8.2 | 9.5 | 8.5 | 10 |
| | | Total fineness | dtex | 25.9 | 25.8 | 25.9 | 25.8 | 25.8 | 25.9 | 25.9 |
| | | Single yarn fineness | dtex | 1.3 | 1.3 | 1.3 | 1.3 | 1.3 | 1.3 | 1.3 |
| | Continuous strength-elongation product | Average value | | 6.5 | 6.5 | 6.5 | 6.4 | 6.3 | 6.3 | 6.4 |
| | | CV% | | 2.7 | 2.8 | 2.9 | 3.3 | 3.9 | 4.3 | 3.4 |
| | | Minimum value | | 5.8 | 5.7 | 5.3 | 5.5 | 5.1 | 5.2 | 5.6 |
| Evaluation | | High-order passability | – | A | A | A | A | C | C | A |
| | | Product quality | – | A | A | A | C | C | C | C |

(Examples 12 and 13)

The same procedure as in Example 8 was carried out except that a nylon-6 fiber was produced with the use ratio of the material-recycled polycaproamide resin pellets being adjusted as shown in Table 4. The results are shown in Table 4.

(Example 14)

The same procedure as in Example 8 was carried out except that the discharge amount was adjusted so that the discharge amount per melt spinning pack was 43 g/min, and a spinneret (number of round holes: 34 holes × 2 groups, 68 holes in total) was used to produce a nylon-6 fiber of 52 dtex and 34 filaments. The results are shown in Table 4.

(Reference Example 2)

Virgin polycaproamide resin pellets obtained in Reference Example 1 were used. The obtained pellets were dried until the moisture content became 300 ppm or less, then put into a melting system having a spin block (spinning thermal insulation box) temperature of 260°C, and melted with a pressure melter at a melting temperature of 265°C. The molten polymer was introduced into a spinning pack incorporating a metal nonwoven filter having a filtration accuracy of 10 um and a spinneret having 20 holes × 3 groups (60 holes in total) of round holes and discharged so that the discharge amount per spinning pack was 30 g/min. A gas generated in the periphery of the spinneret was forcibly removed at a suction wind speed of 25 m/min, and a fiber yarn was cooled with cold air at an air temperature of 18°C

**EP 4 310 228 A1**

and a wind speed of 30 m/min. Thereafter, oil was supplied with an oiling device, and entanglement was imparted with an entanglement nozzle device to produce a nylon-6 fiber of 26 dtex and 20 filaments at a winding speed of 4,000 m/min. The results are shown in Table 4.

[Table 4]

| | | | Example 8 | Example 12 | Example 13 | Example 14 | Reference Example 2 |
|---|---|---|---|---|---|---|---|
| Recycling conditions | Scrap hot water temperature | °C | 80 | 80 | 80 | 80 | – |
| | Melting temperature | °C | 260 | 260 | 260 | 260 | – |
| | Filtration accuracy of filtration filter (first time) | μm | 20 | 20 | 20 | 20 | – |
| | Filtration accuracy of filtration filter (second time) | μm | 10 | 10 | 10 | 10 | – |
| | Melting and filtration time | min/kg | 3 | 3 | 3 | 3 | – |
| | Pellet hot water temperature | °C | 80 | 80 | 80 | 80 | – |
| Characteristics of pellets | Low polymer component content | wt% | 0.9 | 0.9 | 0.9 | 0.9 | 1.1 |
| | 98% sulfuric acid relative viscosity | – | 2.7 | 2.7 | 2.7 | 2.7 | 2.6 |
| | Amino end group content | $10^{-5}$mol/g | 5.4 | 5.4 | 5.4 | 5.4 | 5.3 |
| Spinning conditions | Chip moisture content | ppm | 800 | 800 | 800 | 800 | 60 |
| | Filtration filter | – | Metal short fiber | Metal short fiber | Metal short fiber | Metal short fiber | Nonwoven fabric |
| | Filtration accuracy | μm | 10 | 10 | 10 | 10 | 10 |
| | Ratio of material-recycled nylon-6 | wt% | 100 | 50 | 20 | 100 | 0 |
| Raw yarn characteristics | Mw/Mn | – | 3.16 | 3.10 | 2.90 | 2.80 | 2.90 |
| | Mz/Mw | – | 1.57 | 1.56 | 1.55 | 1.40 | 1.40 |
| | Amino end group content | $10^{-5}$mol/g | 4.9 | 5.3 | 5.6 | 5.1 | 5.6 |
| | Amino end group content CV% | – | 3.4 | 3.4 | 3.2 | 3.5 | 0.0 |
| | Total fineness | dtex | 25.9 | 25.9 | 25.9 | 52.0 | 26 |
| | Single yarn fineness | dtex | 1.3 | 1.3 | 1.3 | 1.5 | 1.3 |
| | Continuous strength-elongation product | Average value | 6.5 | 6.6 | 6.8 | 6.5 | 6.9 |
| | | CV% | 2.7 | 2.6 | 2.4 | 3.0 | 2.9 |
| | | Minimum value | 5.8 | 5.8 | 5.9 | 5.8 | 6.0 |
| Evaluation | High-order passability | – | A | A | A | A | A |
| | Product quality | – | A | A | A | A | A |

(Examples 15 to 17, Comparative Example 14)

Material-recycled polycaproamide resin pellets were produced in the same manner as in Example 1 except that hydrazine monohydrate (manufactured by Tokyo Chemical Industry Co., Ltd.) as a reducing agent was added in the amount with respect to hot water shown in Table 5 when the cut polycaproamide fiber scraps were charged into the extraction tank and when the obtained material-recycled polycaproamide resin pellets were charged into the extraction

# EP 4 310 228 A1

tank.

Production of a nylon-6 fiber was carried out in the same manner as in Example 8 to produce a nylon-6 fiber of 26 dtex and 20 filaments. The results are shown in Table 5.

[Table 5]

| | | | Example 8 | Example 15 | Example 16 | Example 17 | Comparative Example 7 | Comparative Example 14 |
|---|---|---|---|---|---|---|---|---|
| Material-recycled chip | Scrap hot water temperature | °C | 80 | ← | ← | ← | ← | ← |
| | Presence or absence of reducing agent | – | Absent | Present | Present | Present | Absent | Present |
| | Amount of reducing agent | % | 0 | 0.003 | 0.01 | 0.003 | 0 | 0.01 |
| | Melting temperature | °C | 260 | ← | ← | ← | 310 | ← |
| | Filtration accuracy of filtration filter (first time) | μm | 20 | ← | ← | ← | 20 | ← |
| | Filtration accuracy of filtration filter (second time) | μm | 10 | ← | ← | ← | 10 | ← |
| | Melting and filtration time | min/kg | 3 | ← | ← | ← | 3 | ← |
| | Pellet hot water temperature | °C | 80 | ← | ← | ← | 80 | ← |
| | Presence or absence of reducing agent | – | Absent | Present | Present | Absent | Absent | Present |
| | Amount of reducing agent | % | 0 | 0.003 | 0.01 | 0 | 0 | 0.01 |
| | Low polymer component content | wt% | 0.9 | 0.9 | 0.9 | 0.9 | 0.9 | ← |
| | 98% sulfuric acid relative viscosity | – | 2.7 | ← | ← | ← | 3.3 | ← |
| | Amino end group content | $10^{-5}$ mol/g | 5.0 | ← | ← | ← | 3.4 | ← |
| Spinning conditions | Chip moisture content | ppm | 800 | ← | ← | ← | ← | ← |
| | Filtration filter | – | Metal short fiber | ← | ← | ← | ← | ← |
| | Filtration accuracy | μm | 10 | ← | ← | ← | ← | ← |
| | Ratio of material-recycled nylon-6 | wt% | 100 | ← | ← | ← | ← | ← |
| | Mw/Mn | – | 3.16 | 3.14 | 3.15 | 3.17 | 3.40 | 3.40 |
| | Mz/Mw | – | 1.57 | 1.56 | 1.57 | 1.58 | 1.70 | 1.70 |
| | Amino end group content | $10^{-5}$ mol/g | 4.9 | 4.9 | 4.9 | 4.9 | 3.2 | 3.3 |
| | Amino end group content CV% | – | 3.4 | 3.3 | 3.4 | 3.4 | 11.0 | 10.0 |
| Raw yarn characteristics | YI value | – | 15 | 12 | 11 | 14 | 24 | 21 |
| | Total fineness | dtex | 25.9 | 25.8 | 25.9 | 25.9 | 25.8 | 25.8 |
| | Single yarn fineness | dtex | 1.3 | 1.3 | 1.3 | 1.3 | 1.3 | 1.3 |
| | Continuous strength-elongation product — Average value | | 6.5 | 6.5 | 6.5 | 6.5 | 6.3 | 6.2 |
| | Continuous strength-elongation product — CV% | | 2.7 | 2.6 | 2.5 | 2.6 | 3.4 | 3.1 |
| | Continuous strength-elongation product — Minimum value | | 5.8 | 5.8 | 5.8 | 5.8 | 5.8 | 5.8 |
| Evaluation | High-order passability | – | A | A | A | A | B | B |
| | Streak quality | Score | 2 | 2 | 2 | 2 | 1 | 1 |
| | Color tone | Score | 1 | 2 | 2 | 2 | 0 | 1 |
| | Product quality | – | A | A | A | A | C | C |

**Claims**

1.  A nylon-6 fiber comprising 20 wt% or more of material-recycled nylon-6 and having a variance ratio of a molecular weight distribution, weight-average molecular weight (Mw)/number-average molecular weight (Mn), obtained by gel permeation chromatography (GPC) measurement of the nylon-6 of 3.4 or less and z-average molecular weight (Mz)/weight-average molecular weight (Mw) of 1.6 or less.

2.  The nylon-6 fiber according to claim 1, having a total fineness of 3 to 200 dtex, a single yarn fineness of 0.2 to 10 dtex, and a continuous strength-elongation product CV% of 3.5 or less.

3.  The nylon-6 fiber according to claim 1 or 2, having a YI value of 15 or less.

4.  The nylon-6 fiber according to any one of claims 1 to 3, wherein a resin pellet of the material-recycled nylon-6 contains 1.5 wt% or less of a low polymer component.

5.  A material-recycled polycaproamide resin pellet comprising 1.5 wt% or less of a low polymer component detected by a hot water extraction method.

6.  The material-recycled polycaproamide resin pellet according to claim 5, having a filtration pressure increase rate of 2.0 MPa/hour or less.

7.  A method for producing the material-recycled polycaproamide resin pellet according to claim 5, comprising:

    cutting a fiber scrap generated in production process of a polycaproamide fiber;
    immersing the cut fiber scrap in hot water at 50°C or more;
    melting, filtering, and discharging the fiber scrap;
    cooling the discharged polycaproamide resin with water;
    cutting the polycaproamide resin into a pellet; and
    immersing the polycaproamide resin pellet in hot water at 50°C or more.

8.  The method for producing the material-recycled polycaproamide resin pellet according to claim 7, wherein, in the step of melting, filtering, and discharging the fiber scrap, discharge is performed after the filtration step is performed twice or more.

## INTERNATIONAL SEARCH REPORT

| International application No. |
|---|
| **PCT/JP2022/009652** |

### A. CLASSIFICATION OF SUBJECT MATTER

*D01F 6/60*(2006.01)i; *A41D 31/00*(2019.01)i; *C08J 11/06*(2006.01)i; *D01G 11/00*(2006.01)i
FI: D01F6/60 341C; A41D31/00 503E; C08J11/06; D01F6/60 301Z; D01G11/00 ZAB

According to International Patent Classification (IPC) or to both national classification and IPC

### B. FIELDS SEARCHED

Minimum documentation searched (classification system followed by classification symbols)

D01F1/00-6/96 ;9/00-9/04; C08J3/00-3/28; 99/00; C08J5/00-5/02; 5/12-5/22; B29B17/00-17/04; C08J11/00-11/28; C08K3/00-13/08; C08L1/00-101/14; C08G69/00-69/50; B29B7/00-11/14; 13/00-15/06; B29C31/00-31/10; 37/00-37/04; 71/00-71/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2000-511600 A (DSM N.V) 05 September 2000 (2000-09-05) pp. 11-12, 14-19 | 1-4 |
| A | | 5-8 |
| X | JP 49-7359 B2 (UBE INDUSTRIES) 20 February 1974 (1974-02-20) example 1 | 5 |
| Y | example 1 | 6 |
| A | | 1-4, 7-8 |
| X | JP 60-166324 A (TEIJIN LTD) 29 August 1985 (1985-08-29) examples | 5 |
| Y | examples | 6 |
| A | | 1-4, 7-8 |

☑ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **21 April 2022** | **10 May 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT

| International application No. |
| --- |
| **PCT/JP2022/009652** |

**C.    DOCUMENTS CONSIDERED TO BE RELEVANT**

| Category* | Citation of document, with indication, where appropriate, of the relevant passages | Relevant to claim No. |
| --- | --- | --- |
| X | JP 11-343341 A (TORAY IND INC) 14 December 1999 (1999-12-14) | 5 |
|  | example 1 |  |
| Y | example 1 | 6 |
| A |  | 1-4, 7-8 |
| X | JP 2011-524925 A (BASF SE) 08 September 2011 (2011-09-08) | 5 |
|  | examples |  |
| Y | examples | 6 |
| A |  | 1-4, 7-8 |
| Y | JP 10-265664 A (TORAY IND INC) 06 October 1998 (1998-10-06) | 6 |
|  | examples |  |
| A |  | 1-5, 7-8 |
| A | JP 7-149816 A (FURIIDE KRUPP AG HETSUSHIYU KRUPP) 13 June 1995 (1995-06-13) | 1-8 |
| A | JP 2016-514741 A (UHDE INVENTA-FISCHER GMBH) 23 May 2016 (2016-05-23) | 1-8 |
| A | JP 2020-2336 A (CHAIN YARN CO LTD) 09 January 2020 (2020-01-09) | 1-8 |
| A | JP 9-99433 A (TEIJIN LTD) 15 April 1997 (1997-04-15) | 1-8 |
| A | JP 47-47306 B2 (MOMOI FISHING NET MFG CO LTD) 29 November 1972 (1972-11-29) | 1-8 |

Form PCT/ISA/210 (second sheet) (January 2015)

## INTERNATIONAL SEARCH REPORT

| International application No. |
| --- |
| **PCT/JP2022/009652** |

| Box No. III | Observations where unity of invention is lacking (Continuation of item 3 of first sheet) |
| --- | --- |

This International Searching Authority found multiple inventions in this international application, as follows:

The claims of this international application include two inventions.

Invention 1: Claims 1-4
Invention 2: Claims 5-8

The invention in claim 1 lacks novelty in light of document 1, and thus does not have a special technical feature.
Next, a special technical feature was found in the invention in claim 2.
The invention in claims 5-8 is not an invention in the same category that includes all invention-specifying matters of the invention in claim 2.
Therefore, this international application does not comply with the requirement of unity of invention.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

## INTERNATIONAL SEARCH REPORT
### Information on patent family members

| International application No. |
|---|
| **PCT/JP2022/009652** |

| Patent document cited in search report | Publication date (day/month/year) | Patent family member(s) | Publication date (day/month/year) |
|---|---|---|---|
| JP 2000-511600 A | 05 September 2000 | US 6051312 A<br>pp. 6-10<br>WO 1997/046747 A1<br>EP 904435 A1<br>KR 10-2000-0016467 A<br>CN 1227615 A | |
| JP 49-7359 B2 | 20 February 1974 | GB 1297606 A<br>example 1 | |
| JP 60-166324 A | 29 August 1985 | (Family: none) | |
| JP 11-343341 A | 14 December 1999 | US 6169161 B1<br>example 1<br>EP 947536 A2<br>CN 1232047 A<br>KR 10-0603151 B1 | |
| JP 2011-524925 A | 08 September 2011 | US 2011/0092645 A1<br>example<br>WO 2009/153340 A1<br>EP 2297228 A1<br>CN 102066463 A<br>KR 10-2011-0039268 A | |
| JP 10-265664 A | 06 October 1998 | (Family: none) | |
| JP 7-149816 A | 13 June 1995 | US 5459168 A<br>EP 639445 A2 | |
| JP 2016-514741 A | 23 May 2016 | WO 2014/154379 A1<br>EP 2784102 A1<br>CN 105073831 A<br>KR 10-2016-0010393 A | |
| JP 2020-2336 A | 09 January 2020 | US 2020/0002854 A1<br>EP 3590997 A1 | |
| JP 9-99433 A | 15 April 1997 | (Family: none) | |
| JP 47-47306 B2 | 29 November 1972 | (Family: none) | |

Form PCT/ISA/210 (patent family annex) (January 2015)

**EP 4 310 228 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013155454 A
- JP 2009084767 A
- JP 2020002336 A